# EUROPEAN PATENT APPLICATION

(11) **EP 4 597 714 A1**
(43) Date of publication of application: **06.08.2025**
(21) Application number: 22963305.2
(22) Date of filing: 05.12.2022
(51) Int. Cl.: H01M 50/342, H01M 50/30

(54) **CASE ASSEMBLY, BATTERY CELL, BATTERY AND ELECTRIC DEVICE**

(30) Priority: 25.10.2022 CN 202222808079 U
(71) Applicant: Contemporary Amperex Technology (Hong Kong) Limited, Central (HK)
(72) Inventor: SU, Huasheng, Ningde, Fujian 352100 (CN)
(74) Representative: Gong, Jinping
(86) International application number: PCT/CN2022/136479
(87) International publication number: WO 2024/087327

(57) **Abstract**

A housing assembly (400), a battery cell (10), a battery (100), and an electric device (1000) are provided. The housing assembly (100) is used for the battery cell (10) and includes a housing (1) and a separator (420). A pressure relief portion (430) is formed on an outer surface of the housing (1); the separator (420) includes a fitting surface (421), a groove (422) is formed on the fitting surface (421), the fitting surface (421) is fitted to the outer surface of the housing (1), and at least part of the pressure relief portion (430) is accommodated in the groove (422).

## Description

### PRIORITY INFORMATION

This application claims priority and interest to Patent Application No. 202222808079.3 filed with the China National Intellectual Property Administration on October 25, 2022, which is incorporated herein by reference in its entirety.

### TECHNICAL FIELD

This application relates to the field of battery technologies, and in particular, to a housing assembly, a battery cell, a battery, and an electric device.

### BACKGROUND

Batteries are widely used in various electric devices, such as music players, cameras, laptops, and electric vehicles. During the use of batteries, due to the influence of the usage environment and the spatial limitations of the battery housing, thermal runaway of the battery housing often occurs. Thermal runaway of the housing can cause an explosion, and an opening of the housing has lower structural strength compared to other parts of the housing, so a shock wave from the explosion concentrates at the opening of the housing. However, there are generally other components connected at the opening of the housing, and these components can be damaged by the shock wave during the explosion. Therefore, in the prior art, the housing is provided with score marks, so as to offer a pressure relief function for the housing, thereby addressing the issues associated with thermal runaway of the housing. However, due to the need for insulation performance, the housing needs to be covered with a separator after scoring, but scoring the housing affects the flatness of the scored area, causing the separator to wrinkle.

### SUMMARY

This application provides a housing assembly, a battery cell, a battery, and an electric device, so as to solve the problem of the separator wrinkling when the battery housing is scored and covered with the separator.

The housing assembly of the embodiments of this application is used for the battery cells. The housing assembly includes:
a housing, where the housing is provided with a pressure relief portion, and the pressure relief portion at least partially protrudes outward; and
a separator, where the separator includes a fitting surface, a groove is formed on the fitting surface, the fitting surface is fitted to an outer surface of the housing, and at least part of the pressure relief portion is accommodated in the groove.

In the housing assembly of the embodiments of this application, the score marks on the housing can provide the pressure relief function for the housing, and the groove is provided on the fitting surface of the separator, so that when the separator is fitted to the outer surface of the housing, part of the pressure relief portion formed by scoring the housing can be accommodated in the groove. This can reduce a local height difference when the separator is fitted to the outer surface of the housing, further avoiding the problem that the separator, when fitted to the housing, wrinkles due to provision of the pressure relief portion on the outer surface of the housing.

In some embodiments, score marks are provided around the pressure relief portion.

Thus, the pressure relief portion has a low structural strength at the positions provided with the score marks, so that part of the shock wave can be released from the score marks when the housing experiences thermal runaway, thereby reducing magnitude of the shock wave at the housing opening. As a result, the outer surface of the housing can relieve pressure evenly, preventing the shock wave from damaging other components outside the housing.

In some embodiments, a height by which the pressure relief portion protrudes from the outer surface is a, and a depth of the groove is t, where t ≥ a/6.

Thus, proper setting of the depth of the groove can avoid the problem that the separator, when fitted to the housing, wrinkles due to the presence of the pressure relief portion.

In some embodiments, along a height direction of the housing, a size of the groove is greater than a size of the pressure relief portion.

Thus, in the height direction of the housing, the separator can cover the entire pressure relief portion, so that the presence of the pressure relief portion does not cause the separator to wrinkle when fitted to the housing.

In some embodiments, the housing includes a side wall and a bottom wall connected to one end of the side wall, the pressure relief portion is formed on an outer peripheral surface of the side wall, and the separator is adhered to the outer peripheral surface of the side wall.

Thus, compared to the bottom wall, formation of the pressure relief portion on the outer peripheral surface of the side wall can reduce the impact on other components outside the housing when the housing experiences thermal runaway, and the separator can provide an insulation function for the outer peripheral surface of the housing.

In some embodiments, the side wall is a cylinder.

Thus, compared to other shapes, arranging the side wall as a cylindrical shape facilitates fitting of the separator to the side wall, with the separator less likely to wrinkle.

In some embodiments, the pressure relief portion is provided in plurality, the plurality of pressure relief portions form at least one pressure relief portion group, each of the pressure relief portion group includes a plurality of pressure relief portions, and the plurality of pressure relief portions in each pressure relief portion group are spaced along the circumferential direction of the side wall.

Thus, when thermal runaway occurs in the housing, the plurality of pressure relief portions can provide better pressure relief capability compared to a single pressure relief portion, thereby protecting other components outside the housing.

In some embodiments, the separator includes a plurality of film layers, the plurality of film layers are stacked, and the groove is formed in at least one of the film layers.

Thus, compared to a single film layer, the stacked arrangement of a plurality of film layers allows the groove to be deeper, allowing more of the contour of the pressure relief portion to be accommodated in the groove.

In some embodiments, the plurality of film layers include an adhesive layer and a substrate layer, the adhesive layer and the substrate layer are alternately disposed, and one of the adhesive layers includes the fitting surface.

Thus, the adhesive layer allows the separator to be fitted to the housing, and the substrate layer is configured to implement the insulation function. The alternate arrangement of the adhesive layer and the substrate layer can increase the thickness of the separator, so that the groove can be deeper, thereby allowing more of the contour of the pressure relief portion to be accommodated in the groove.

In some embodiments, the film layer includes a plurality of film materials, the plurality of film materials are discontinuously disposed, and in two adjacent film layers, a film material of one film layer covers a discontinuous position of a film material of the other film layer.

Thus, such arrangement of the film materials makes the separator less likely to wrinkle when fitted to the outer surface of the housing. Also, such arrangement of the film materials can reduce the amount of film material used, thereby lowering the use costs.

A battery cell in an embodiment of this application includes the housing assembly according to any one of the foregoing embodiments and an electrode assembly, where the electrode assembly is accommodated in the housing.

A battery in an embodiment of this application includes a box and the battery cell according to the foregoing embodiment, where the battery cell is accommodated in the box.

An electric device in an embodiment of this application includes the battery according to the foregoing embodiment.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. Moreover, throughout the accompanying drawings, the same reference signs represent the same parts. In the accompanying drawings:
FIG. 1 is a schematic structural diagram of an electric device according to an embodiment of this application;
FIG. 2 is a schematic exploded view of a battery according to an embodiment of this application;
FIG. 3 is a schematic exploded view of a battery cell according to an embodiment of this application;
FIG. 4 is a schematic exploded view of a housing assembly according to an embodiment of this application;
FIG. 5 is schematic structural diagram of a housing according to an embodiment of this application;
FIG. 6 is a schematic structural diagram of a separator according to an embodiment of this application;
FIG. 7 is a locally enlarged view of the housing in FIG. 5 along direction B-B;
FIG. 8 is a cross-sectional view of the housing in FIG. 5 along direction A-A; and
FIG. 9 is a schematic structural diagram of a separator according to an embodiment of this application.

Reference signs in specific embodiments are as follows:
electric device 1000; battery 100; controller 200; motor 300; battery cell 10; box 20; first portion 201; second portion 202; housing 1; electrode assembly 2; end cover 3; housing assembly 400; separator 420; pressure relief portion 430; fitting surface 421; groove 422; side wall 11; bottom wall 12; outer peripheral surface 110; first pressure relief portion group 440; second pressure relief portion group 450; first film layer 423; second film layer 424; third film layer 425; fourth film layer 426; first film material 427; second film material 428; third film material 429; fourth film material 4201; fifth film material 4202.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include" and "have" and any other variations thereof in the specification, claims and brief description of drawings of this application are intended to cover non-exclusive inclusions.

In the description of the embodiments of this application, the technical terms "first", "second", and the like are merely intended to distinguish between different objects, and shall not be understood as any indication or implication of relative importance or any implicit indication of the number, sequence or primary-secondary relationship of the technical features indicated. In the description of the embodiments of this application, "a plurality of" means at least two unless otherwise specifically stated.

In this specification, reference to "embodiment" means that specific features, structures, or characteristics described with reference to the embodiment may be incorporated in at least one embodiment of this application. The word "embodiment" appearing in various positions in the specification does not necessarily refer to the same embodiment or an independent or alternative embodiment that is exclusive of other embodiments. Persons skilled in the art explicitly and implicitly understand that the embodiments described herein may combine with another embodiment.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the apparatuses or components mentioned must have specific orientations or must be constructed or manipulated according to specific orientations, and therefore shall not be construed as any limitations on the embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, any may refer to a direct connection, an indirect connection via an intermediate medium, or an interaction between two elements. Persons of ordinary skill in the art can understand specific meanings of these terms in the embodiments of this application as suitable to specific situations.

Currently, from the development of the market situation, the application of batteries is becoming more extensive. With the diversification of usage scenarios and the increasing precision of internal components of batteries, the safety performance of batteries is increasingly emphasized. The battery generates some heat during use, especially in high-temperature usage environments where the battery may experience thermal runaway, leading to safety risks.

Further, the inventors have found that a pressure relief structure can be provided on the battery cell to release the internal pressure of the battery cell through the pressure relief structure, so as to reduce the risk of explosion or fire of the battery cell, or mitigate the adverse effects after the battery cell explodes or catches fire. Specifically, an outer peripheral surface of the housing can be scored to reduce the structural strength of the outer peripheral surface of the housing. This allows the stress to be evenly distributed on various parts of the housing when the battery cell explodes, thereby improving the use safety of the battery cell.

Still further, the inventors have noted that due to the need for insulation performance, the housing needs to be covered with a separator after the housing is scored. Scoring the housing causes the scored material to be compressed, forming protrusions near the score marks, so the separator often wrinkles when fitted to the housing.

In view of this, the embodiments of this application provide a design of a housing assembly, where the housing assembly can include a housing and a separator, the separator can include an adhesive layer and a substrate layer, the adhesive layer can be used for adhering to the housing, and the substrate layer provides an insulation function for the housing.

In such housing assembly, grooves can be provided in the adhesive layer and the substrate layer, allowing the protrusions on the housing to be accommodated in the grooves, thereby preventing the separator from wrinkling when fitted to the housing.

The housing assembly of the embodiments of this application can be widely used in battery cells, batteries, and electric devices using batteries.

The electric device may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The foregoing electric device is not particularly limited in the embodiments of this application.

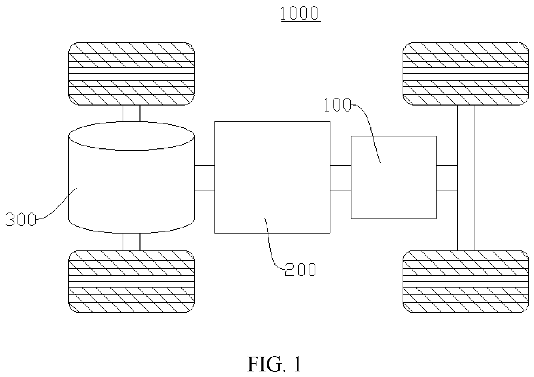

Referring to FIG. 1, FIG. 1 is a schematic structural diagram of a vehicle according to an embodiment of this application. For ease of description, the electric device 1000 being a vehicle is used as an example for the description of the following embodiments. The vehicle is provided with a battery 100 inside, where the battery 100 may be disposed at the bottom, front, or rear of the vehicle. The battery 100 may be configured to supply power to the vehicle. For example, the battery 100 may be used as an operational power source for the vehicle.

The vehicle may further include a controller 200 and a motor 300, where the controller 200 is configured to control the battery 100 to supply power to the motor 300, for example, to satisfy operating power needs of start, navigation, and driving of the vehicle.

In the embodiments of this application, the battery 100 can be used as not only the operational power source for the vehicle but also a driving power source for the vehicle, replacing all or part of the fossil fuel or the natural gas to provide driving power for the vehicle.

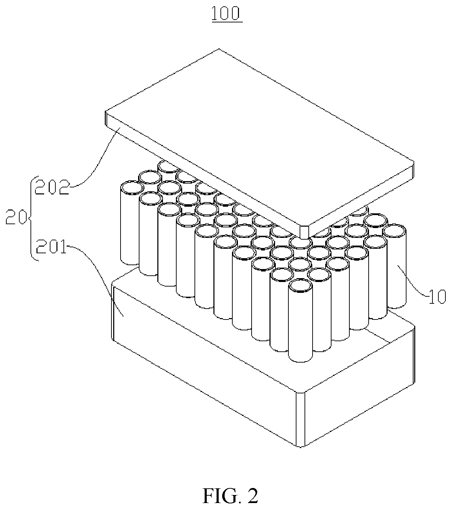

Referring to FIG. 2, FIG. 2 is a schematic exploded view of a battery 100 according to an embodiment of this application. The battery 100 includes a battery cell 10 and a box 20, and the box 20 is configured to accommodate the battery cell 10.

In the embodiments of this application, the battery cell 10 may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell 10 may be cylindrical, flat, rectangular, or of other shapes. This is also not limited in the embodiments of this application. The battery cells 10 are typically divided into three types by packaging method: cylindrical battery cell, rectangular battery cell, and soft pack battery cell. This is not limited in the embodiments of this application either.

The battery 100 mentioned in the embodiments of this application is a single physical module that includes one or more battery cells 10 for providing a higher voltage and capacity. For example, the battery 100 mentioned in this application may include a battery module, a battery pack, or the like. The battery 100 typically includes a box 20 configured to enclose one or more battery cells 10. The box 20 can prevent fluid or other foreign matter from affecting charging or discharging of the battery cell 10.

The box 20 is a component for accommodating the battery cell 10, the box 20 provides an accommodating space for the battery cell 10, and the box 20 may be of a variety of structures. In some embodiments, the box 20 may include a first portion 201 and a second portion 202. The first portion 201 and the second portion 202 fit together to jointly define the accommodating space for accommodating the battery cell 10. The first portion 201 and the second portion 202 may be of a variety of shapes, such as cuboid or cylinder. The first portion 201 may be a hollow structure with one side open, and the second portion 202 may also be a hollow structure with one side open, where the open side of the second portion 202 is engaged with the open side of the first portion 201 so as to form a box 20 having the accommodating space. Alternatively, the first portion 201 may be a hollow structure with one side open, and the second portion 202 may be a plate structure, where the second portion 202 is engaged with the open side of the first portion 201 so as to form the box 20 having the accommodating space. The first portion 201 and the second portion 202 may be sealed by a sealing element, and the sealing element may be a sealing ring, a sealing adhesive, or the like.

In the battery 100, when the battery cell 10 is provided in plurality, the plurality of battery cells 10 may be connected in series, parallel, or series-parallel, where being connected in series-parallel means a combination of series and parallel connections of the plurality of battery cells 10. The battery cells 10 may be connected in series, parallel, or series-parallel first to form a battery module, and then a plurality of battery modules are connected in series, parallel, or series-parallel to form an entirety which is accommodated in the box 20. Alternatively, all the battery cells 10 are directly connected in series, parallel, or series-parallel to form an entirety which is then accommodated in the box 20.

In some embodiments, the battery 100 may further include a busbar, and the plurality of battery cells 10 may be electrically connected via the busbar, so that the plurality of battery cells 10 in the battery module are connected in series, parallel, or series-parallel. The busbar may be metal conductors, such as copper, iron, aluminum, stainless steel, or aluminum alloy.

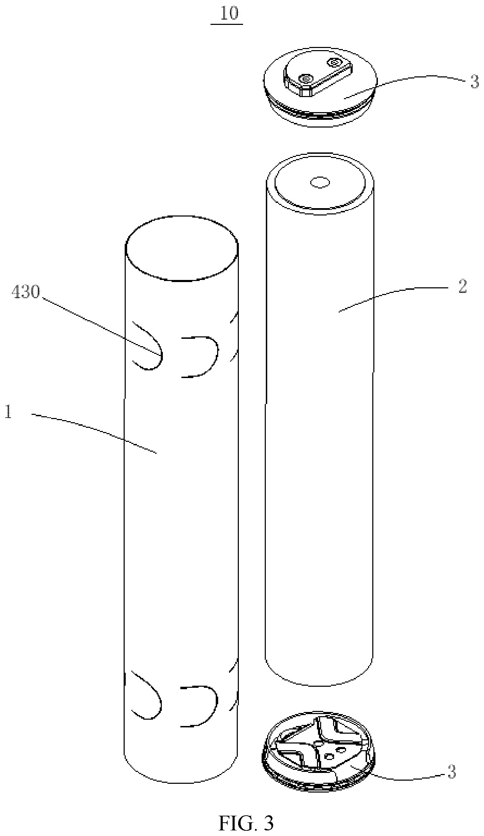

Referring to FIG. 3, FIG. 3 is a schematic exploded view of a battery cell 10 according to an embodiment of this application. The battery cell 10 includes a housing 1, an electrode assembly 2, and an end cover 3.

The housing 1 is a component configured to accommodate the electrode assembly 2. The housing 1 may be a hollow structure with an opening formed at one end; or the housing body 1 may be a hollow structure with openings formed at two opposite ends. The housing 1 may be of various shapes, such as a cylinder and a cuboid. The housing 1 may be made of various materials, such as copper, iron, aluminum, steel, and aluminum alloy.

The electrode assembly 2 is a component in the battery cell 10 in which electrochemical reactions take place. The electrode assembly 2 may include a positive electrode plate, a negative electrode plate, and a separator. The electrode assembly 2 may be a wound structure formed by winding the positive electrode plate, the separator, and the negative electrode plate, or a stacked structure formed by stacking the positive electrode plate, the separator, and the negative electrode plate.

The end cover 3 is a component that closes the opening of the housing 1 to isolate an internal environment of the battery cell 10 from an external environment. The end cover 3 and the housing 1 jointly define a sealed space for accommodating the electrode assembly 2, electrolyte, and other components. The end cover 3 can be welded to the housing 1 to close the opening of the housing 1. The end cover 3 may match the opening of the housing 1 in shape. For example, the housing 1 is a rectangular structure, and the end cover 3 is a rectangular plate-shaped structure that matches the housing 1. For another example, the housing 1 is a cylinder, and the end cover 3 is a circular plate-shaped structure that matches the housing 1. The end cover 3 may be made of various materials, such as copper, iron, aluminum, steel, and aluminum alloy.

In an embodiment in which the housing 1 is a hollow structure with an opening at one end, one end cover 3 can be correspondingly provided. In an embodiment in which the housing 1 is a hollow structure with openings at both ends, two end covers 3 can be correspondingly provided.

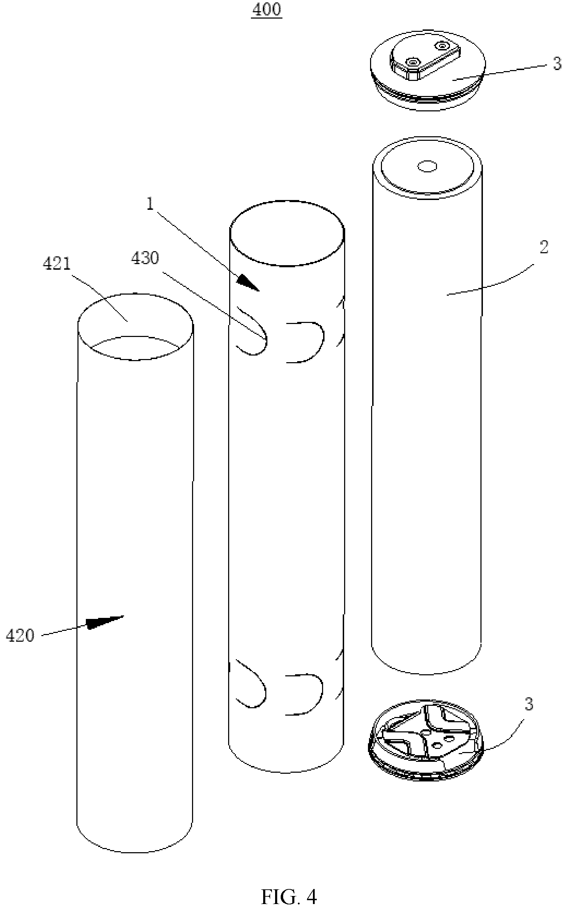

Referring to FIGs. 2 and 4, FIG. 4 is a schematic exploded view of a housing assembly 400 according to an embodiment of this application. The housing assembly 400 of this embodiment of this application is used for the battery cell 10, and includes a housing 1 and a separator 420. The housing 1 is provided with a pressure relief portion 430, and the pressure relief portion 430 at least partially protrudes outward. The separator 420 includes a fitting surface 421, a groove 422 is formed on the fitting surface 421, the fitting surface 421 is fitted to an outer surface of the housing 1, and at least part of the pressure relief portion 430 is accommodated in the groove 422.

Specifically, the separator 420 may be a film used to provide an insulation function for the housing 1, and the separator 420 may be made of a material such as polypropylene (polypropylene, PP) or polyethylene (polyethylene, PE). When the separator 420 is fitted to the outer surface of the housing 1, one entire integrally formed separator 420 can be directly fitted to the outer surface of the housing 1, or the separators 420 with different lengths can be sequentially fitted to the outer surface of the housing 1 until the outer surface of the housing 1 is fully covered.

When the separators 420 of different lengths are used, the separators 420 can first be fitted to the part of the outer surface of the housing 1 without the pressure relief portion 430, and then fitted to the part of the outer surface of the housing 1 with the pressure relief portion 430. Similarly, the separator 420 can first be fitted to the part of the outer surface of the housing 1 with the pressure relief portion 430, and then fitted to the part of the outer surface of the housing 1 without the pressure relief portion 430.

The outer surface of the housing 1 is a body portion of the housing 1 extending in the height direction. Taking the housing 1 being a cylinder as an example, the height direction of the housing 1 is consistent with an axial direction. The outer surface of the housing 1 can be a surface of the housing 1 in contact with the outside. The outer surface of the housing 1 can be smooth or have a certain roughness, and the outer surface of the housing 1 can be used for adhering the separator 420.

The pressure relief portion 430 can be the part formed on the outer surface of the housing 1 and having a height difference with the outer surface of the housing 1. The pressure relief portion 430 can be formed by scoring the outer surface of the housing 1. It should be understood that when the outer surface of the housing 1 is scored, the material near the score marks is compressed. To be specific, the pressure relief portion 430 protrudes toward from the housing, where the height of the protrusion depends on the depth of the score marks and the material property of the housing. Therefore, the flatness around the pressure relief portion 430 is affected, thereby affecting the flatness of the separator 420 when fitted to the outer surface of the housing 1, meaning that the separator 420 wrinkles. In addition, the pressure relief portion 430 can be provided in plurality, and the cross section of the pressure relief portion 430 can be fan-shaped, circular, rectangular, or the like.

The fitting surface 421 can be a surface of the separator 420 fitted to the outer surface of the housing 1. The fitting surface 421 of the separator 420 can have certain adhesive performance, so that the separator 420 can be fitted to the outer surface of the housing 1 without falling off.

In the housing assembly 400 of the embodiments of this application, the score marks on the housing 1 can provide a pressure relief function for the housing 1, and the groove 422 is provided on the fitting surface 421 of the separator 420, so that when the separator 420 is fitted to the outer surface of the housing 1, part of the pressure relief portion 430 formed by scoring the housing 1 can be accommodated in the groove 422. This can reduce a local height difference when the separator 420 is fitted to the outer surface of the housing 1, further avoiding the problem that the separator 420, when fitted to the housing 1, wrinkles due to provision of the pressure relief portion 430 on the outer surface of the housing 1.

Referring to FIG. 4, in some embodiments, score marks are provided around the pressure relief portion 430.

Specifically, the depth of the score marks can be properly set based on a wall thickness of the housing 1. The score mark can be provided in plurality, and the depth of the score mark can be greater than 0mm and less than the wall thickness of the housing 1. For example, the wall thickness of the housing 1 is 2mm, and the depth of the score marks can be 0.5mm, 1mm, 1.5mm, or the like. The embodiments of this application do not specifically limit the depth of the score marks, and it should be noted that the values herein are merely an exemplary description for ease of understanding and should not be considered as limitation on the embodiments of this application. The provision of the score marks removes part of the material of the housing 1, reducing the local structural strength of the housing 1. Moreover, provision of the score marks leads to formation of the pressure relief portion 430 on the outer surface of the housing 1.

Thus, the position at which score marks are provided around the pressure relief portion 430 has low structural strength, so that part of the shock wave can be released from the score marks when the housing 1 experiences thermal runaway, thereby reducing the magnitude of the shock wave size at an opening of the housing 1. As a result, pressure can be evenly relieved from the outer surface of the housing 1, preventing the shock wave from damaging other components outside the housing 1.

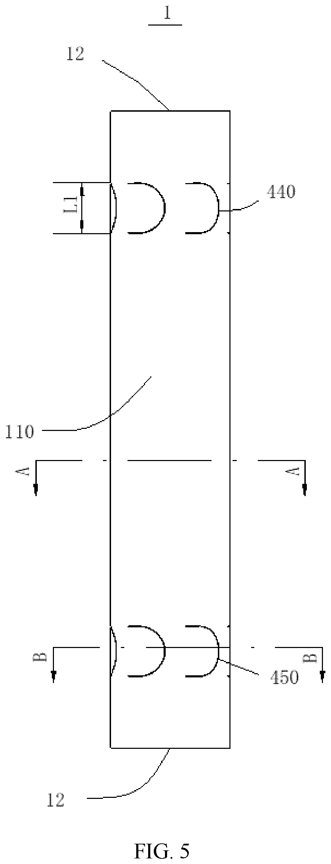

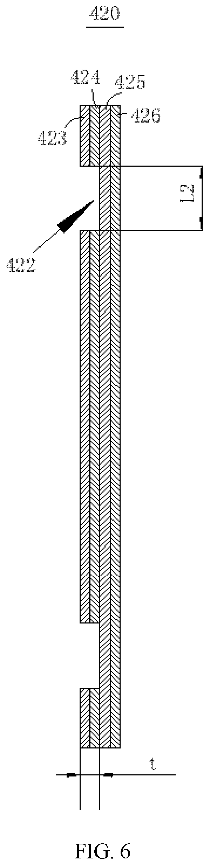

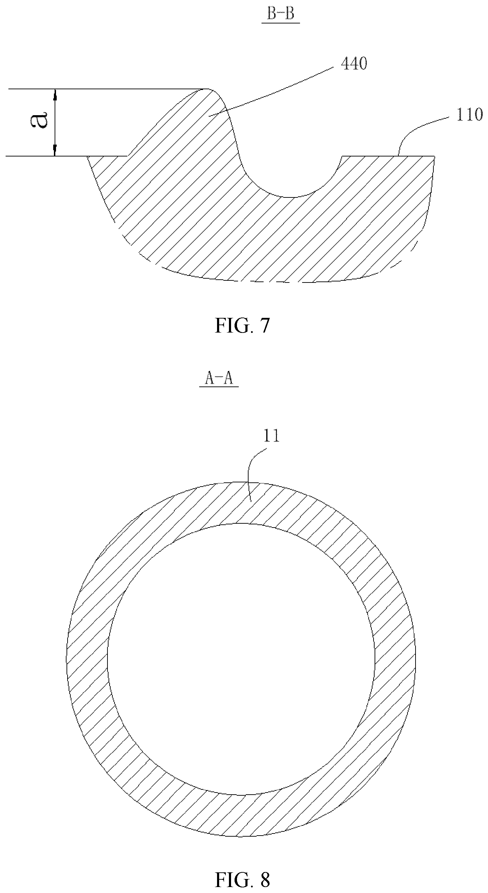

Referring to FIGs. 5, 6, and 7, FIG. 5 is a schematic structural diagram of a housing 1 according to an embodiment of this application, FIG. 6 is a schematic structural diagram of a separator 420 according to an embodiment of this application, and FIG. 7 is a locally enlarged view of the housing 1 in FIG. 5 along direction B-B. In some embodiments, a height by which the pressure relief portion 430 protrudes from the outer surface is a, and a depth of the groove 422 is t, where t ≥ a/6.

Specifically, the depth t of the groove 422 can be a/6, a/2, a, or the like. It should be understood that when the depth t of the groove 422 is a/6, at least part of the pressure relief portion 430 can be accommodated in the groove 422 in the depth direction of the groove 422, and after the separator 420 is fitted to the outer surface of the housing 1, a height difference can be created between an area of the separator 420 in contact with the pressure relief portion 430 and an area of the separator 420 not in contact with the pressure relief portion 430. However, compared to a case of without the groove 422, the height difference is reduced to some extent, making the separator 420 less likely to wrinkle after fitted to the outer surface of the housing 1. When the depth t of the groove 422 is a, the entire pressure relief portion 430 can be accommodated in the groove 422 in the depth direction of the groove 422. At this time, after the separator 420 is fitted to the housing 1, no height difference is created between an area of the separator 420 in contact with the pressure relief portion 430 and an area of the separator 420 not in contact with the pressure relief portion 430, making the separator 420 even less likely to wrinkle compared to a case that the depth t of the groove 422 is a/6.

The groove 422 may face away from a part of the outer surface of the housing 1 in contact with the fitting surface 421 and recess into the fitting surface 421, and a length L2 and a depth t of the groove 422 can match a length L1 and a height a of the pressure relief portion 430, so that at least part of the pressure relief portion 430 can be accommodated in the groove 422. For example, the length L1 and the height a of the pressure relief portion 430 are 5mm and 2mm respectively, and the length L2 and depth t of the groove 422 can be set to 4.5mm and 1.5mm respectively. In this case, at least part of the pressure relief portion 430 is accommodated in the groove 422. It should be noted that the values herein are merely an exemplary description for ease of understanding and should not be considered as limitation on the embodiments of this application.

Thus, proper setting of the depth t of the groove 422 can avoid the problem that the separator 420, when fitted to the housing 1, wrinkles due to the presence of the pressure relief portion 430.

Referring to FIGs. 5 and 6, in some embodiments, along a height direction of the housing 1, a size of the groove 422 is greater than a size of the pressure relief portion 430.

Specifically, taking the housing 1 being a cylinder as an example, the height direction of the housing 1 is an axial direction of the cylinder. When the length L1 of the pressure relief portion 430 is 5mm, the length L2 of the groove 422 can be 5.5mm, 6mm, 7mm, or the like. The embodiments of this application do not specifically limit the length L2 of the groove 422, and it should be noted that the values herein are merely an exemplary description for ease of understanding and should not be considered as limitation on the embodiments of this application.

Thus, in the height direction of the housing 1, the separator 420 can cover the entire pressure relief portion 430, so that the presence of the pressure relief portion 430 does not cause the separator 420 to wrinkle when fitted to the housing 1.

Referring to FIGs. 4, 5, and 8, FIG. 8 is a cross-sectional view of the housing 1 in FIG. 5 along direction A-A. In some embodiments, the housing 1 includes a side wall 11 and a bottom wall 12 connected to an end of the side wall 11, the pressure relief portion 430 is formed on an outer peripheral surface 110 of the side wall 11, and the separator 420 is adhered to the outer peripheral surface 110 of the side wall 11.

Specifically, the side wall 11 of the housing 1 can be a body portion of the housing 1 extending in the height direction. Taking the housing 1 being a cylinder as an example, the height direction of the housing 1 is consistent with the axial direction, and the side wall 11 of the housing 1 may be a body portion of the housing 1 extending in the axial direction. Further, the side wall 11 may be a cylindrical structure around the axis of the housing 1, a cross section of the side wall 11 is annular, the cross section is perpendicular to the axis of the housing 1, and the outer peripheral surface 110 of the side wall 11 can be a curved surface where the generatrix of the cylindrical structure is located.

The bottom wall 12 can be a body portion of the housing 1 extending in a width direction. Taking the housing 1 being a cylinder as an example, the width direction of the housing 1 is consistent with a radial direction, and the bottom wall 12 of the housing 1 can be a body portion of the housing 1 extending in the radial direction. Further, the bottom wall 12 of the housing 1 can be two end surfaces of the cylinder. An end cover 3 can be provided on the bottom wall 12, and the end cover 3 is configured to close the space of the housing 1. However, since the bottom wall 12 and the end cover 3 are not an integrated structure, when the housing 1 experiences thermal runaway, the pressure is concentrated and released at a connection between the end cover 3 and the bottom wall 12. This causes the connection between the end cover 3 and the bottom wall 12 to fail, further damaging the components outside the housing 1.

The pressure relief portion 430 can be formed on the outer peripheral surface 110 of the side wall 11 by scoring the side wall 11. The pressure relief portion 430 can be provided in plurality, and the plurality of pressure relief portions 430 can be distributed on the outer peripheral surface 110 of the side wall 11. Additionally, after the outer peripheral surface 110 of the side wall 11 is scored, the structural strength at the score marks of the side wall 11 is reduced, so that when the housing 1 experiences thermal runaway, part of the pressure can be distributed to the score marks of the side wall 11, thereby achieving the purpose of pressure relief.

The separator 420 can be totally fitted to the outer peripheral surface 110 of the side wall 11, and the separator 420 can provide an insulation function for the outer peripheral surface 110 of the side wall 11.

Thus, compared to the bottom wall 12, the pressure relief portion 430 formed on the outer peripheral surface 110 of the side wall 11 can reduce the impact on other components outside the housing 1 during thermal runaway of the housing 1, and the separator 420 can provide an insulation function for the outer peripheral surface 110 of the housing 1.

Referring to FIGs. 4 and 8, in some embodiments, the side wall 11 is a cylinder.

Specifically, the cylinder means that the cross section of the side wall 11 is annular.

Thus, compared to other shapes, arranging the side wall 11 as a cylindrical shape facilitates fitting of the separator 420 to the side wall 11, with the separator 420 less likely to wrinkle.

Referring to FIGs. 4 and 5, in some embodiments, the pressure relief portion 430 is provided in plurality, the plurality of pressure relief portions 430 form at least one pressure relief portion 430 group, each of the pressure relief portion 430 group includes a plurality of pressure relief portions 430, and the plurality of pressure relief portions 430 in each pressure relief portion 430 group are spaced along a circumferential direction of the side wall 11.

Specifically, two, three, four, or more pressure relief portions 430 can be provided. For example, ten pressure relief portions 430 can be provided, and two groups of pressure relief portions 430 can be formed in the circumferential direction of the side wall 11. A first pressure relief portion group 440 can be formed at a position of the side wall 11 near one end of the bottom wall 12 of the housing 1, and the first pressure relief portion group 440 can include five pressure relief portions 430. The five pressure relief portions 430 can be arranged evenly around the circumferential direction of the side wall 11 at a certain interval or arranged in the circumferential direction of the side wall 11 at random intervals. Similarly, a second pressure relief portion group 450 can be formed at a position of the side wall 11 near the other end of the bottom wall 12 of the housing 1, and the second pressure relief portion group 450 can include five pressure relief portions 430. The five pressure relief portions 430 can be arranged evenly around the circumferential direction of the side wall 11 at a certain interval or arranged in the circumferential direction of the side wall 11 at random intervals. It should be noted that the quantities herein are merely an exemplary description for ease of understanding and should not be considered as limitation on the embodiments of this application.

Thus, when thermal runaway occurs in the housing 1, the plurality of pressure relief portions 430 can provide better pressure relief capability compared to a single pressure relief portion 430, thereby protecting other components outside the housing 1.

Referring to FIGs. 4 and 6, in some embodiments, the separator 420 includes a plurality of film layers, the plurality of film layers are stacked, and the groove 422 is formed in at least one of the film layers.

Specifically, the separator 420 can include two, three, four, or more film layers. For example, the separator 420 can include four film layers, the four film layers are stacked together, and each film layer can provide a different function for the separator 420. The groove 422 can be formed at a first film layer 423, or at a first film layer 423 and a second film layer 424, or at a third film layer 425. Herein, "formed" means that the groove 422 penetrates the film layers. It should be understood that when the separator 420 has four layers, the groove 422 can penetrate at least three film layers. Compared to the groove 422 penetrating one film layer, when the groove 422 penetrates three film layers, the groove 422 is deeper, the pressure relief portion 430 can be more fully accommodated in the groove 422, thereby making the height difference smaller or approximate to zero when the separator 420 is fitted to the side wall 11. However, the groove 422 cannot penetrate the fourth film layer 426 so as to prevent affecting the insulation performance of the separator 420.

Thus, compared to a single film layer, the stacked arrangement of a plurality of film layers allows the groove 422 to be deeper, allowing more of the contour of the pressure relief portion 430 to be accommodated in the groove 422.

Referring to FIG. 6, in some embodiments, the plurality of film layers include an adhesive layer and a substrate layer, the adhesive layer and the substrate layer are alternately disposed, and one of the adhesive layers includes the fitting surface 421.

Specifically, the adhesive layer can be a film layer configured to fit the separator 420 to the outer surface of the housing 1, and the adhesive layer can be further configured to adhere two substrate layers, allowing the two substrate layers to be fitted together. The substrate layer can be a film layer configured to provide insulation performance for the separator 420. Being alternately disposed means that the substrate layers and the adhesive layers are in a one-to-one correspondence in number, with different substrate layers connected together by the adhesive layers. For example, in one separator 420 with four film layers, the first film layer 423 can be an adhesive layer configured to adhere to the outer surface of the housing 1 and allow the separator 420 to be fitted to the housing 1; the second film layer 424 can be a substrate layer configured to provide an insulation function for the separator 420; the third film layer 425 can be an adhesive layer configured to adhere the second film layer 424 and the fourth film layer 426, and the fourth film layer 426 is configured to provide an insulation function for the separator 420. In addition, the plurality of film layers can make the groove 422 deeper without affecting the insulation performance of the separator 420.

Thus, the adhesive layer allows the separator 420 to be fitted to the housing 1, and the substrate layer is configured to implement the insulation function. The alternate arrangement of the adhesive layer and the substrate layer can increase the thickness of the separator 420, so that the groove 422 can be deeper, thereby allowing more of the contour of the pressure relief portion 430 to be accommodated in the groove 422.

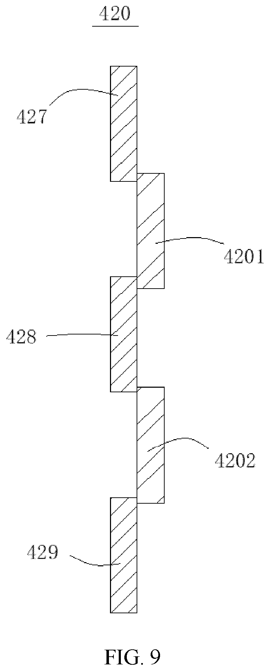

Referring to FIG. 9, FIG. 9 is a schematic structural diagram of a separator 420 according to an embodiment of this application. In some embodiments, the film layer includes a plurality of film materials, and the plurality of film materials are discontinuously disposed. In two adjacent film layers, the film material of one film layer covers a discontinuous position of the film material of the other film layer.

Specifically, one film layer can include two, three, four, or even more film materials. Being discontinuously disposed means that the film materials have a certain interval between them, and covering the discontinuous position means that the interval between the film material of one film layer is covered by the film material of the other film layer. For example, one film layer can include three film materials, where there is a certain interval between a first film material 427 and a second film material 428, there is a certain interval between the second film material 428 and a third film material 429, and the first film material 427 and the third film material 429 are located on different sides of the second film material 428. Similarly, the other film layer can include two film materials, where there is a certain interval between a fourth film material 4201 and a fifth film material 4202, the fourth film material 4201 covers the interval between the first film material 427 and the second film material 428, and the fifth film material 4202 covers the interval between the second film material 428 and the third film material 429. Such arrangement is equivalent to the film material itself having the groove 422, eliminating the need to remove material from the separator 420 after the separator 420 is formed.

Thus, such arrangement of the film materials makes the separator 420 less likely to wrinkle when fitted to the outer surface of the housing 1. Also, such arrangement of the film materials can reduce the amount of film material used, thereby lowering the use costs.

A battery cell 10 in an embodiment of this application includes the housing assembly 400 according to any one of the foregoing embodiments and an electrode assembly 2, where the electrode assembly 2 is accommodated in the housing 1.

A battery 100 in an embodiment of this application includes a box 20 and the battery cell 10 according to the foregoing embodiment, where the battery cell 10 is accommodated in the box 20.

An electric device in an embodiment of this application includes the battery 100 according to the foregoing embodiment.

Specifically, the electric device may be any one of the foregoing devices using the battery 100.

In a specific embodiment, a housing assembly 400 is provided. The housing assembly 400 includes a housing 1 and a separator 420 fitted to an outer surface of the housing 1. The housing 1 can be scored to reduce a structural strength at the score marks, achieving the purpose of pressure relief, thereby solving the problem of thermal runaway in the battery cell 10. After scoring, a pressure relief portion 430 is formed on an outer surface of the housing 1, so the groove 422 can be disposed on the separator 420 to solve the problem of the separator 420 wrinkling when fitted to the outer surface of the housing 1.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of the claims and specification of this application. In particular, as long as there is no structural conflict, the various technical features mentioned in the embodiments can be combined in any manner. This application is not limited to the specific embodiments disclosed in this specification but includes all technical solutions falling in the scope of the claims.

## Claims

1. A housing assembly for a battery cell, **characterized in that** the housing assembly comprises:
a housing, wherein the housing is provided with a pressure relief portion, and the pressure relief portion at least partially protrudes outward; and
a separator, wherein the separator comprises a fitting surface, a groove is formed on the fitting surface, the fitting surface is fitted to an outer surface of the housing, and at least part of the pressure relief portion is accommodated in the groove.

2. The housing assembly according to claim 1, **characterized in that** score marks are provided around the pressure relief portion.

3. The housing assembly according to claim 1, **characterized in that** a maximum height by which the pressure relief portion protrudes from the outer surface is a, and a depth of the groove is t, wherein t ≥ a/6.

4. The housing assembly according to claim 1, **characterized in that** along a height direction of the housing, a size of the groove is greater than a size of the pressure relief portion.

5. The housing assembly according to claim 1, **characterized in that** the housing comprises a side wall and a bottom wall connected to one end of the side wall, the pressure relief portion is formed on an outer peripheral surface of the side wall, and the separator is adhered to the outer peripheral surface of the side wall.

6. The housing assembly according to claim 5, **characterized in that** the side wall is a cylinder.

7. The housing assembly according to claim 5, **characterized in that** the pressure relief portion is provided in plurality, the plurality of pressure relief portions form at least one pressure relief portion group, each of the pressure relief portion group comprises a plurality of pressure relief portions, and the plurality of pressure relief portions in each of the pressure relief portion group are spaced along a circumferential direction of the side wall.

8. The housing assembly according to claim 1, **characterized in that** the separator comprises a plurality of film layers, the plurality of film layers are stacked, and the groove is formed in at least one of the film layers.

9. The housing assembly according to claim 8, **characterized in that** the plurality of film layers comprise an adhesive layer and a substrate layer, the adhesive layer and the substrate layer are alternately disposed, and one of the adhesive layers comprises the fitting surface.

10. The housing assembly according to claim 8, **characterized in that** the film layer comprises a plurality of film materials, the plurality of film materials are discontinuously disposed, and in two adjacent film layers, the film material of one film layer covers a discontinuous position of the film material of the other film layer.

11. A battery cell, **characterized by** comprising:
the housing assembly according to any one of claims 1 to 10; and
an electrode assembly, accommodated in the housing.

12. A battery, **characterized by** comprising:
a box; and
the battery cell according to claim 11, wherein the battery cell is accommodated in the box.

13. An electric device, **characterized by** comprising the battery according to claim 12.
